# EUROPEAN PATENT APPLICATION

(11) **EP 4 485 939 A2**
(43) Date of publication of application: **01.01.2025**
(21) Application number: 23785096.1
(22) Date of filing: 08.03.2023
(51) Int. Cl.: H04N 21/23, G10L 15/08, G06T 13/40, H04N 5/262

(54) **DETERMINATION METHOD AND APPARATUS FOR VIDEO WITH SPECIAL EFFECTS, ELECTRONIC DEVICE, AND STORAGE MEDIUM**

(30) Priority: 07.04.2022 CN 202210362558
(71) Applicant: Lemon Inc., Grand Cayman, KY1-1205 (KY)
(72) Inventor: DAHLMAN, Dustin, Culver City, California 90230 (US); YE, Xin, Los Angeles, California 90066 (US); CHEN, Jiajun, Beijing 100086 (CN)
(74) Representative: Dentons UK and Middle East LLP
(86) International application number: PCT/SG2023/050143
(87) International publication number: WO 2023/195909

(57) **Abstract**

Embodiments of the present application disclose a determination method and apparatus for a video with special effects, an electronic device, and a storage medium. The method comprises: in response to a special effect triggering operation, adding a virtual special effect model to a target object; controlling a target virtual part of the virtual special effect model corresponding to the target object to move according to collected audio information, and adjusting a target real part of the target object to a preset state to obtain a video with a target special effect.

## Description

The present disclosure claims priority of the Chinese Patent Application No. 202210362558.9 filed with the Chinese Patent Office on April 7, 2022, the entire disclosure of which is incorporated by reference in the present disclosure.

### TECHNICAL FIELD

Embodiments of the present disclosure relate to the field of computer technology, for example, to a method and apparatus for determining an effect video, an electronic device and a storage medium.

### BACKGROUND

With the development of network technology, more and more application programs enter the user's life, especially a series of software that can capture short videos, which are deeply loved by users.

When capturing the corresponding video or image based on the software for capturing short video, some effects are often done to improve the interest of the video. However, the existing effects are not rich in content and simple in display, which leads to poor viewing experience and use experience for users.

### SUMMARY

The disclosure provides a method and apparatus for determining an effect video, an electronic device and a storage medium, in order to achieve richness and interestingness of the video content, and thus improve the user experience.

An embodiment of the disclosure provides a method for determining an effect video, which includes: in response to an effect triggering operation, adding a virtual effect model for a target object; and based on audio information collected, controlling a target virtual part of a virtual effect model corresponding to the target object to move, and adjusting a target entity part of the target object to a preset state to obtain a target effect video.

An embodiment of the disclosure further provides an apparatus for determining an effect video, which includes: an effect model adding module, configured to, in response to an effect triggering operation, add a virtual effect model for a target object; and a target effect video determining module, configured to, based on audio information collected, control a target virtual part of a virtual effect model corresponding to the target object to move, and adjust a target entity part of the target object to a preset state to obtain a target effect video.

An embodiment of the disclosure further provides an electronic device, which includes: at least one processor; and a storage apparatus configured to store at least one program, the at least one program upon being executed by the at least one processor, causing the at least one processor to implement the method for determining the effect video according to any of the embodiments of the present disclosure.

An embodiment of the disclosure further provides a storage medium, including computer-executable instructions, the computer-executable instructions upon being executed by a computer processor, performing the method for determining the effect video according to any of the embodiments of the present disclosure.

### BRIEF DESCRIPTION OF DRAWINGS

Fig. 1 is a flowchart of a method for determining an effect video provided in an embodiment of the present disclosure;
Fig. 2 is a flowchart of a method for determining an effect video provided in an embodiment of the present disclosure;
Fig. 3 is a flowchart of an apparatus for determining an effect video provided in an embodiment of the disclosure; and
Fig. 4 is a structural schematic diagram of an electronic device provided in an embodiment of the present disclosure.

### DETAILED DESCRIPTION

Embodiments of the present disclosure will be described below with reference to the drawings. Although some embodiments of the present disclosure are shown in the drawings, it should be understood that the present disclosure may be embodied in a plurality of forms and should not be construed as limited to the embodiments set forth herein. It should be understood that the drawings and examples of this disclosure are only used for illustrative purposes, and are not used to limit the protection scope of this disclosure.

It should be understood that the steps described in the method embodiment of the present disclosure can be performed in a different order and/or in parallel. Furthermore, method embodiments may include additional steps and/or omit performing the illustrated steps. The scope of the present disclosure is not limited in this respect.

The term "including" and variations thereof used in this article are open-ended inclusion, namely "including but not limited to". The term "based on" refers to "at least partially based on". The term "one embodiment" means "at least one embodiment"; the term "another embodiment" means "at least one other embodiment"; and the term "some embodiments" means "at least some embodiments". Relevant definitions of other terms may be given in the description hereinafter.

It should be noted that concepts such as "first" and "second" mentioned in the present disclosure are only used to distinguish different apparatuses, modules or units, and are not intended to limit orders or interdependence relationships of functions performed by these apparatuses, modules or units.

It should be noted that modifications of "one" and "more" mentioned in the present disclosure are schematic rather than restrictive, and those skilled in the art should understand that unless otherwise stated in the context, it should be understood as "one or more".

Names of messages or information exchanged between a plurality of apparatuses in embodiments of the present disclosure are only used for description and not meant to limit the scope of these messages or information.

Before introducing embodiments of the present disclosure, the application scenario may be exemplified first. The specific embodiment of that disclosure may be applied to any frame requiring effect display, for example, a short video capture scene, or any existing video capture scene.

In an embodiment of the disclosure, the algorithm for realizing a prop may be deployed on the terminal device. Or, it may be integrated on the existing video capture software to increase the interesting effect of video capture. The implementations may be described with reference to the following.

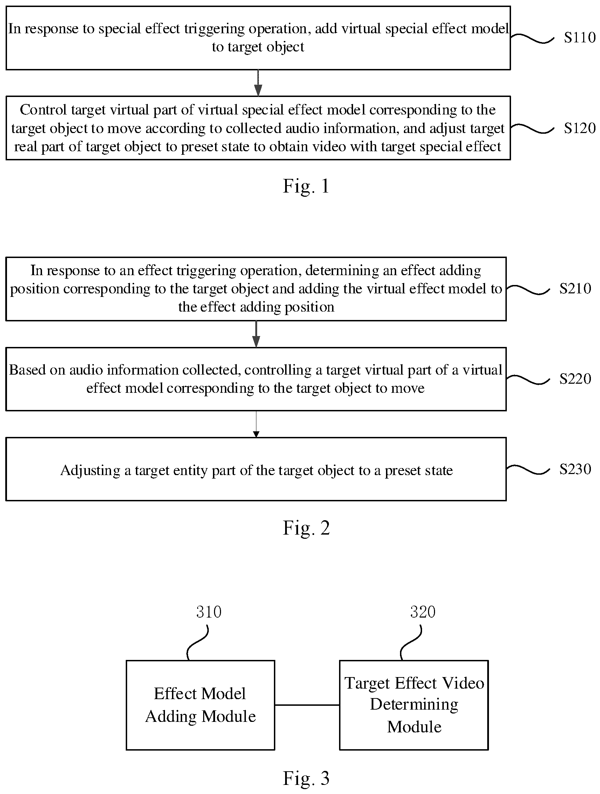

Fig. 1 is a flowchart of a method for determining an effect video provided in an embodiment of the present disclosure. The embodiment may be applied to the case of performing effects processing on real-time captured video or recorded video in any image display scene supported by the Internet. The method may be executed by an apparatus for determining an effect video, which may be implemented in the form of software and/or hardware, and the hardware may be an electronic device, such as a mobile terminal, a personal computer (PC) terminal or a server. Any image display scene is usually realized by the cooperation of the client and the server, and the method provided in the embodiment may be executed by the server, the client, or the cooperation between the client and the server.

As shown in Fig. 1, the method of this embodiment includes the following steps.

S 110, in response to an effect triggering operation, adding a virtual effect model for a target object.

The apparatus for executing the method for determining the effect video provided by the embodiment of the disclosure may be integrated in an application software supporting the function of determining the effect video, and the software may be installed in an electronic device, optionally, the electronic device may be a mobile terminal or a PC terminal. Application software may be a kind of software for image/video processing, and its application software will not be described here, as long as it can realize image/video processing. The application software may also be a specially developed application program to add and display effects, or it may be integrated into a corresponding page, and the users can add an effect through the page integrated in the PC.

It should be noted that the embodiment of the present disclosure may be developed as an effect prop, which can be integrated into any software that can capture a video, for example, a camera apparatus that comes with the terminal device. Alternatively, in the corresponding short video capture software, when the user captures a video, broadcasts live or generates an interesting interactive interface, the effect prop may be triggered to generate an effect video.

The target object is an object in a capture screen, or any object that needs to be added with a corresponding virtual effect model. The virtual effect model may be a model to be added, which may be any cartoon model designed in the development stage, or any pet model, which may be displayed in the form of an image, or an augmented reality (AR) model, or a three-dimensional model. For example, a plurality of pre-made cat AR effect models.

The user may trigger the corresponding application software, and after entering the main page, may click the capture control to enter the capture page. The effect prop displayed on the capture page corresponding to the effect may be triggered. If the display interface includes the target object, the user may add any virtual effect model for the target obj ect, or the user may add a default virtual effect model for the target obj ect when the user does not trigger the virtual effect model selection control. If the user selects the virtual effect model, the selected virtual effect model can be added for the user.

In the embodiment, the in response to an effect triggering operation includes at least one of the following: detecting that the target object is included in a capture screen; detecting that a control corresponding to a target effect prop is triggered; detecting that a body movement of the target object in the capture screen is consistent with a body movement for adding an effect; or detecting that voice information triggers a wake-up word for adding an effect.

The control may be a key displayed on the display interface of the application software, and triggering the key indicates that an effect video needs to be generated. The key may be a physical key or a virtual key. In practical application, if the user triggers the key, it may be considered that an effect video corresponding to the effect prop is to be generated. What exactly are the effect added may be consistent with the effect triggered by the user. Alternatively, voice information may be collected based on a microphone array deployed on the terminal device, and the voice information may be analyzed and processed. If the processing result includes words for adding an effect, it means that the effect adding function is triggered. Based on the content of voice information, it is determined whether to add an effect to avoid the interaction between the user and the display page, which improves the intelligence of adding the effect. Another way is to determine whether the body movement of the target subject in the field of view is consistent with the preset body movement according to the capture field of view of the mobile terminal. If so, it means that the effect adding operation is triggered, for example, the preset body movement is in a "victory" posture, and if the body movement of the target subject triggers the victory posture, it means that the effect triggering operation is triggered. In other words, after the effect prop is triggered, as long as it is detected that a face image is included in the visual field of the capture apparatus, the effect triggering operation is triggered, that is, as long as it is detected that the target object is included in the capture screen, it can be considered that the corresponding virtual effect model needs to be added for the target object.

It should be noted that in practical application, the number of target objects may be one or more. For example, if the effect video that the user wants only includes one user, it may be captured in an environment with a low crowd density. Of course, if the capture is performed in an environment with a high crowd density, the number of objects in the capture screen may include a plurality of objects. If the plurality of objects in the capture screen are taken as target objects, virtual effect models may be added to all target objects. If there are a plurality of objects in the capture screen, but only one object is the target object, the target object may be marked in advance to add the virtual effect model to only the marked target object when there are a plurality of objects being captured, Alternatively, the marked target object is displayed on the display interface, and other objects are not displayed.

In the embodiment, before adding the virtual effect model for the target object, the method further includes: determining a virtual effect model corresponding to the target object from a virtual effect library, the virtual effect library including at least one virtual effect model to be selected.

It should be noted that in the development stage, a plurality of virtual effect models may be designed and stored in the virtual effect library. The plurality of virtual effect models stored in the virtual effect library may be a human model, an animal model, a cartoon pattern model or any landscape model, and the above virtual effect models may be used as virtual effect models to be selected. The virtual effect model added for the target object may be a model among the virtual effect models to be selected.

In response to the effect triggering operation, a virtual effect model may be randomly selected from the virtual effect library and added to the target object. Alternatively, a default virtual effect model may be set, and the default virtual effect model may be added for the target object when the effect prop is detected to be triggered and the target object is detected to be included in the display interface, and the user has not selected the virtual effect model. In another case, after the effect prop is detected to be triggered, a virtual model selection menu can be popped up, and the user may trigger the virtual effect model displayed in the menu and add the triggered virtual effect model for the target object.

In the embodiment, determining the virtual effect model corresponding to the target object from the virtual effect library includes: based on the basic attribute information of the target object, determining the virtual effect model corresponding to the target object.

In practice, in order to make the added virtual effect model most suitable for the target object, the virtual effect model suitable for the target object may be selected from the virtual effect library.

The basic attribute information may be the basic information of the user. Optionally, the basic information may be corresponding to the avatar information registered by the user. For example, if the avatar is a landscape, a virtual effect model of the landscape may be selected. If the avatar is a cartoon pattern, a virtual effect model corresponding to the cartoon pattern may be selected from the virtual effect library.

It should be noted that the virtual effect model may be preset in the development stage, or generated in real time according to actual needs. Optionally, before adding the virtual effect model for the target object, the method further includes: acquiring a to-be-processed image which is pre-uploaded, and determining the virtual effect model based on at least one display object in the to-be-processed image.

The to-be-processed image is a pre-captured image by the user. The image may include a captured animal or plant, and may further include a landscape. The animal or plant in the to-be-processed image is used as a display object. The virtual effect model may be generated based on the display object, and the customization of the virtual effect model is realized.

Before adding the virtual effect model for the target object, the image upload control may be triggered to upload the to-be-processed image to the software. The software can identify the display object in the to-be-processed image and reconstruct a virtual effect model corresponding to the display object. After the reconstruction is completed, the virtual effect model may be added for the target object.

In practice, the target objects in the capture screen may include one or a plurality of objects. When a plurality of objects are included, all the objects may be regarded as target objects, or the target objects may be determined according to the preset selection condition. The way can be described below.

Optionally, the number of target objects includes at least one, and adding the virtual effect model for the target object includes: respectively adding a corresponding virtual effect model for each of the at least one target object; or adding a virtual effect model for a target object meeting a preset condition among the at least one target object; or determining a target obj ect corresponding to the audio information, adding the virtual effect model for the target object, and transparently displaying virtual effect models corresponding to other target objects among the at least one target object.

In the embodiment, if the number of target objects includes a plurality, adding the virtual effect model for the target object may be: adding corresponding virtual effects model or adding the same virtual effect model for a plurality of target objects in the capture screen. The way to determine the virtual effect model can be described above. A prelabelled object may be used as the target object, and the virtual effect model may be added to the target object. In another way, a plurality of objects in the display interface are acquired in real time, and the target object corresponding to audio information is determined in real time, in order to add the virtual effect model to the target object corresponding to the audio information. Another way is that after determining the virtual effect model corresponding to each target object, audio information may be acquired in real time, and the virtual effect model of the target object corresponding to the audio information may be displayed, and the virtual effect models of other objects that are not sounding may be displayed transparently.

S120, based on audio information collected, controlling a target virtual part of a virtual effect model corresponding to the target obj ect to move, and adjusting a target entity part of the target object to a preset state to obtain a target effect video.

The target virtual part is a part on the virtual effect model. The target entity part may be the five sensory parts on the target object's face. Optionally, the target virtual part is the mouth part of the virtual effect model. The target entity part is the mouth part of the target object. The preset state may be any one of a smiling state and a closed state.

After the audio information is collected, the mouth part of the virtual effect part corresponding to the target object may be controlled to open and close. At the same time, the mouth part of the target object is adjusted to a smiling state. The adjustment of the mouth part to the smiling state may be achieved by a pre-trained neural network. Based on the above methods, the final target effect video can be generated. When the condition of stopping capture is detected to be triggered, the final target effect video is obtained.

In the embodiment, adjusting the target entity part to the preset state may be: adjusting the target entity part from a first state to the preset state based on an entity part adjustment model corresponding to the preset state.

The entity part adjustment model is pre-trained and used to adjust the target entity part in the face image from the open and closed state to the smiling state. The first state is the mouth state corresponding to any expression such as opening and smiling. The preset state is the expected output state during model training, for example, the preset state is the smiling state, etc.

When the target object speaks, the target virtual part may be controlled to move, and at the same time, target entity part of the target object may be adjusted to the smiling state.

For example, when the target object sends out audio information, the mouth part of the virtual model may be controlled to move based on the audio information sent by the target object, and adjust the mouth part of the target object to a smiling state to achieve the effect of ventriloquism.

In the embodiment of the present disclosure, a virtual effect model is added for the target object in response to the effect triggering operation, the target virtual part of the virtual effect model corresponding to the target object is controlled to move according to the collected audio information, and the target entity part of the target object is adjusted to a preset state to obtain the target effect video, so that the richness and interestingness of video capture content are realized, and at the same time, the effect of ventriloquism is achieved.

Fig. 2 is a flowchart of a method for determining an effect video provided in an embodiment of the present disclosure. On the basis of the above-mentioned embodiment, it can be explained that "based on audio information collected, controlling a target virtual part of a virtual effect model corresponding to the target object to move, and adjusting a target entity part of the target object to a preset state to obtain a target effect video", and its specific implementation can be referred to the description of the embodiment, in which the same or corresponding technical terms as the above-mentioned embodiment are not repeated here.

As shown in Fig. 2, the method includes the following steps.

S210, in response to an effect triggering operation, determining an effect adding position corresponding to the target object and adding the virtual effect model to the effect adding position.

The effect adding position includes any position on a limb and a trunk of the target object or any position in a preset neighborhood centered on the target object. Alternatively, any position may be a shoulder, or any position at a certain distance from the user's trunk. The preset neighborhood may be anywhere within a certain range from the user's edge contour.

In the embodiment, determining the effect adding position corresponding to the target object and adding the virtual effect model to the effect adding position includes: determining hand information of the target object, and determining that the effect adding position is a hand part in response to the hand information being consistent with preset hand posture information; and adding the virtual effect model at the hand part.

The hand posture may be a posture in which the hand is in a greeting posture. A plurality of postures for greeting may be preset and used as a preset hand posture.

The hand part of the target object is detected in real time, and when the hand part's posture is consistent with the preset hand posture, the effect adding position is determined as the hand part. The determined virtual effect model may be added to the hand part. At this time, the hand is invisible to the user on the display interface. That is, the virtual effect part is obscured from the hand part.

S220, based on audio information collected, controlling a target virtual part of a virtual effect model corresponding to the target object to move.

Optionally, in response to the audio information being collected, the target virtual part of the virtual effect model corresponding to the target object is controlled to move; or in response to the audio information being detected to include triggering motion content, the target virtual part of the virtual effect model corresponding to the target object is controlled to move.

As long as the audio information is collected, the target object corresponding to the audio information can be determined. The mouth part of the virtual effect model added on the hand part of the target object can be driven to move. Alternatively, the audio information of at least one target object may be acquired in real time, and whether the audio information triggers the mouth motion content is determined. For example, the triggered motion content may be words such as ventriloquism, so that the target virtual part of the virtual effect part model can be controlled to move.

In the embodiment, controlling the target virtual part of the virtual effect model corresponding to the target object to move may include at least three situations, and the corresponding implementation of each situation is described. The first implementation may be as follows: hiding the target virtual part from display, and migrating the target entity part to the target virtual part based on a pre-trained entity part migration model, motion information of the target virtual part corresponding to mouth shape information of the target entity part.

Based on the pre-trained entity part migration model, the mouth part of the target object in the facial image may be cut out and migrated to the target virtual part. At this time, the motion information of the target virtual part is consistent with the mouth shape information of the target entity part.

The second implementation may be as follows: acquiring mouth shape information of the target entity part and controlling the target virtual part to move based on the mouth shape information, motion information of the target virtual part being consistent with the mouth shape information.

The mouth shape information of the target entity may be acquired in real time, and the motion information of the target virtual part in the virtual effect model is controlled to be consistent with the mouth shape information, so as to achieve the effect that the audio information is sent by the virtual effect model.

The third implementation may be as follows: acquiring motion information of the hand part, and controlling the target virtual part to move based on the motion information.

The motion information of the hand part may be detected in real time, and the target virtual part may be controlled to move when the hand part moves, so as to achieve the effect that the audio information is sent by the target virtual part.

In practice, there may be a situation in which the user's hand part does not move although the user sends out audio information, in which case: in response to not obtaining the motion information of the hand part, controlling the target virtual part to move based on the audio information, motion information of the target virtual part corresponding to mouth information of the audio information.

The target virtual part may be dual-driven based on the audio information and the hand part. When the hand part motion is detected, the target virtual part may be controlled to move based on the hand part, so as to reach the target virtual part and send out corresponding audio information. Alternatively, when the hand part motion is not detected, the target virtual part may be directly controlled to move based on the audio information. The motion information of the target virtual part corresponds to the mouth shape corresponding to the audio information.

S230, adjusting a target entity part of the target object to a preset state.

In the process of controlling the target virtual part to move, the target entity part may be adjusted to a smiling state.

In the embodiment of the present disclosure, a virtual effect model can be added for the target object in response to an effect triggering operation, and after the audio information is collected, the mouth part of the target object can be moved to the target virtual part of the virtual effect model, and the motion information of the target virtual part is controlled to correspond to the mouth type information of the audio information, and the state of the mouth part of the target object can be adjusted to a preset state, so that the content richness and interestingness of the effect video can be realized, so as to achieve the effect of ventriloquism.

Fig. 3 is a flowchart of an apparatus for determining an effect video provided in an embodiment of the disclosure. The apparatus for determining the effect video can execute the method for determining the effect video provided by any embodiment of the disclosure can be executed, and has the corresponding functional modules. As shown in Fig. 3, the apparatus includes an effect model adding module 310 and a target effect video determining module 320.

The effect model adding module 310 is configured to add a virtual effect model for a target object in response to an effect triggering operation; and the target effect video determining module 320 is configured to, based on audio information collected, control a target virtual part of a virtual effect model corresponding to the target object to move, and adjust a target entity part of the target object to a preset state to obtain a target effect video.

On the basis of the above embodiments, the in response to an effect triggering operation includes at least one of the following: detecting that the target object is included in a capture screen; detecting that a control corresponding to a target effect prop is triggered; detecting that a body movement of the target object in the capture screen is consistent with a body movement for adding an effect; or detecting that voice information triggers a wake-up word for adding an effect.

On the basis of the above embodiment, the effect model adding module is further configured to determine a virtual effect model corresponding to the target object from a virtual effect library, where the virtual effect library includes at least one virtual effect model to be selected.

On the basis of the above embodiment, the effect model adding module is configured to determine the virtual effect model corresponding to the target object based on the basic attribute information of the target object.

On the basis of the above embodiment, the effect model adding module is further configured to acquire a to-be-processed image which is pre-uploaded, and determine the virtual effect model based on at least one display object in the to-be-processed image.

On the basis of the above embodiments, the number of the target objects includes at least one, and the effect model adding module is configured to respectively add a corresponding virtual effect model for each of the at least one target object; or add a virtual effect model for a target object meeting a preset condition among the at least one target object; determine a target object corresponding to the audio information, add the virtual effect model for the target object, and transparently displaying virtual effect models corresponding to other target objects among the at least one target object.

On the basis of the above embodiment, the effect model adding module is configured to determine an effect adding position corresponding to the target object and add the virtual effect model to the effect adding position, where the effect adding position includes any position on a limb and a trunk of the target object or any position in a preset neighborhood centered on the target object.

On the basis of the above embodiment, the effect model adding module is configured to: determine hand information of the target object, and determine that the effect adding position is a hand part in response to the hand information being consistent with preset hand posture information; and add the virtual effect model at the hand part.

On the basis of the above embodiments, the target effect video determining module is configured to control the target virtual part of the virtual effect model corresponding to the target object to move in response to the audio information being collected; or, in response to the audio information being detected to include triggering motion content, control the target virtual part of the virtual effect model corresponding to the target object to move.

On the basis of the above embodiment, the target effect video determining module is configured to hide the target virtual part from display, and migrate the target entity part to the target virtual part based on a pre-trained entity part migration model, where motion information of the target virtual part corresponds to mouth shape information of the target entity part

On the basis of the above embodiment, the target effect video determining module is configured to acquire mouth shape information of the target entity part and control the target virtual part to move based on the mouth shape information, where motion information of the target virtual part is consistent with the mouth shape information.

On the basis of the above technical scheme, the target effect video determining module is configured to acquire motion information of the hand part, and control the target virtual part to move based on the motion information.

On the basis of the above embodiment, the target effect video determining module is further configured to control the target virtual part to move based on the audio information in response to not obtaining the motion information of the hand part, where motion information of the target virtual part corresponds to mouth information of the audio information.

On the basis of the above embodiment, the target effect video determining module is configured to adjust the target entity part from a first state to the preset state based on an entity part adjustment model corresponding to the preset state.

On the basis of the above embodiment, the target entity part is a mouth part of the target object, the target virtual part is a mouth part of the virtual effect, and the preset state is a closed state or a smiling state of the mouth part.

In the embodiment of the disclosure, a virtual effect model is added to the target object in response to an effect triggering operation, the target virtual part of the virtual effect model corresponding to the target object is controlled to move based on the collected audio information, and the target entity part of the target object is adjusted to a preset state to obtain the target effect video, so that the richness and interestingness of video capture content are realized, and at the same time, the effect of ventriloquism is achieved.

The apparatus for determining the effect video provided by the embodiment of the disclosure can execute the method for determining the effect video provided by any embodiment of the disclosure, and has a corresponding functional module for executing the method.

It is worth noting that the plurality of units and modules included in the above apparatus are only divided according to functional logic, but are not limited to the above division, as long as the corresponding functions can be realized. In addition, the names of the plurality of functional units are only for the convenience of distinguishing each other, and are not used to limit the protection scope of the embodiment of the disclosure.

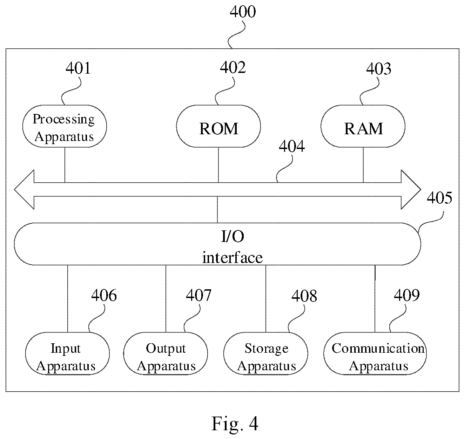

Fig. 4 is a structural schematic diagram of an electronic device provided in an embodiment of the present disclosure. Fig. 4 is specifically referred below, and it shows the structural schematic diagram suitable for achieving the electronic device (e.g. a terminal device or a server in Fig. 4) 400 in the embodiment of the present disclosure. The terminal device in the embodiment of the present disclosure may include but not limited to a mobile terminal such as a mobile phone, a notebook computer, a digital broadcasting receiver, a personal digital assistant (PDA), a portable android device (PAD), a portable multimedia player (PMP), a vehicle terminal (such as a vehicle navigation terminal), and a fixed terminal such as a digital television (TV) and a desktop computer. The electronic device shown in Fig. 4 is only an example and should not bring any limitation to the scope of functionality and use of embodiments of the present disclosure.

As shown in Fig. 4, the electronic device 400 may include a processing apparatus (such as a central processing unit, and a graphics processor) 401, the processing apparatus 401 may execute a plurality of appropriate actions and processes according to a program stored in a read-only memory (ROM) 402 or a program loaded from a storage apparatus 408 to a random-access memory (RAM) 403. In RAM 403, a plurality of programs and data required for operations of the electronic device 400 are also stored. The processing apparatus 401, ROM 402, and RAM 403 are connected to each other by a bus 404. An input/output (I/O) interface 405 is also connected to the bus 404.

Typically, the following apparatuses may be connected to the I/O interface 405: an input apparatus 406 such as a touch screen, a touchpad, a keyboard, a mouse, a camera, a microphone, an accelerometer, and a gyroscope; an output apparatus 407 such as a liquid crystal display (LCD), a loudspeaker, and a vibrator; a storage apparatus 408 such as a magnetic tape, and a hard disk drive; and a communication apparatus 409. The communication apparatus 409 may allow the electronic device 400 to wirelesscommunicate or wire-communicate with other devices so as to exchange data. Although Fig. 4 shows the electronic device 400 with a plurality of apparatuses, it is not required to implement or possess all the apparatuses shown. Alternatively, it may implement or possess the more or less apparatuses.

According to the embodiment of the present disclosure, the process described above with reference to the flowchart may be achieved as a computer software program. For example, an embodiment of the present disclosure includes a computer program product, it includes a computer program carried on a non-transitory computer-readable medium, and the computer program includes program codes for executing the method shown in the flowchart. In such an embodiment, the computer program may be downloaded and installed from the network by the communication apparatus 409, or installed from the storage apparatus 408, or installed from ROM 402. When the computer program is executed by the processing apparatus 401, the above functions defined in the method in the embodiments of the present disclosure are executed.

Names of messages or information exchanged between a plurality of apparatuses in embodiments of the present disclosure are only used for description and not meant to limit the scope of these messages or information.

The electronic device provided in the embodiments of the present disclosure belongs to the same inventive concept as the method for determining the effect video provided in the above embodiments, and technical details not exhaustively described in the present embodiments can be found in the above embodiments.

The embodiment of the disclosure provides a computer storage medium, on which computer programs are stored, and when the programs are executed by a processor, the method for determining the effect video provided by the above embodiment is realized.

It should be noted that the above computer-readable medium in the present disclosure may be a computer-readable signal medium, a computer-readable storage medium, or any combinations of the two. The computer-readable storage medium may be, but not limited to, for example, a system, an apparatus or a device of electricity, magnetism, light, electromagnetism, infrared, or semiconductor, or any combinations of the above. More examples of the computer-readable storage medium may include but not limited to: an electric connector with one or more wires, a portable computer magnetic disk, a hard disk drive, a RAM, a ROM, an erasable programmable read-only memory (EPROM) or flash memory, an optical fiber, a compact disk read-only memory (CD-ROM), an optical storage device, a magnetic storage device or any suitable combinations of the above. In the present disclosure, the computer-readable storage medium may be any visible medium that contains or stores a program, and the program may be used by an instruction executive system, apparatus or device or used in combination with it. In the present disclosure, the computer-readable signal medium may include a data signal propagated in a baseband or as a part of a carrier wave, it carries the computer-readable program code. The data signal propagated in this way may adopt a plurality of forms, including but not limited to an electromagnetic signal, an optical signal, or suitable combinations of the above. The computer-readable signal medium may also be any computer-readable medium other than the computer-readable storage medium, and the computer-readable signal medium may send, propagate, or transmit the program used by the instruction executive system, apparatus or device or in combination with it. The program code contained on the computer-readable medium may be transmitted by using any suitable medium, including but not limited to: a wire, an optical cable, a radio frequency (RF) or the like, or any suitable combinations of the above.

In some embodiments, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable storage medium may be included in the electronic device described above, or may exist alone without being assembled into the electronic device.

The above-mentioned computer-readable medium carries one or more programs which, when executed by the electronic device, cause the electronic device to: add a virtual effect model for a target object in response to an effect triggering operation; and based on audio information collected, control a target virtual part of a virtual effect model corresponding to the target obj ect to move, and adjust a target entity part of the target object to a preset state to obtain a target effect video.

The computer program code for executing the operation of the present disclosure may be written in one or more programming languages or combinations thereof, the above programming language includes but not limited to object-oriented programming languages such as Java, Smalltalk, and C++, and also includes conventional procedural programming languages such as a "C" language or a similar programming language. The program code may be completely executed on the user's computer, partially executed on the user's computer, executed as a standalone software package, partially executed on the user's computer and partially executed on a remote computer, or completely executed on the remote computer or server. In the case involving the remote computer, the remote computer may be connected to the user's computer by any types of networks, including LAN or WAN, or may be connected to an external computer (such as connected by using an internet service provider through the Internet).

The flowcharts and the block diagrams in the drawings show possibly achieved system architectures, functions, and operations of systems, methods, and computer program products according to a plurality of embodiments of the present disclosure. At this point, each box in the flowchart or the block diagram may represent a module, a program segment, or a part of a code, the module, the program segment, or a part of the code contains one or more executable instructions for achieving the specified logical functions. It should also be noted that in some alternative implementations, the function indicated in the box may also occur in a different order from those indicated in the drawings. For example, two consecutively represented boxes may actually be executed basically in parallel, and sometimes it may also be executed in an opposite order, this depends on the function involved. It should also be noted that each box in the block diagram and/or the flowchart, as well as combinations of the boxes in the block diagram and/or the flowchart, may be achieved by using a dedicated hardware-based system that performs the specified function or operation, or may be achieved by using combinations of dedicated hardware and computer instructions.

The units described in the embodiment of the present disclosure can be realized by software or hardware. The name of the unit does not constitute a limitation on the unit itself in some cases. For example, the first acquisition unit can also be described as "a unit that acquires at least two Internet protocol addresses".

The functions described above in this article may be at least partially executed by at least one hardware logic component. For example, exemplary types of the hardware logic component that may be used include: a field programmable gate array (FPGA), an application specific integrated circuit (ASIC), an application specific standard part (ASSP), a system on chip (SOC), a complex programmable logic device (CPLD) and the like.

In the context of the present disclosure, the machine-readable medium may be a visible medium, and it may contain or store a program for use by or in combination with an instruction executive system, apparatus, or device. The machine-readable medium may be a machine-readable signal medium or a machine-readable storage medium. The machine-readable medium may include but not limited to an electronic, magnetic, optical, electromagnetic, infrared, or semiconductor system, apparatus, or device, or any suitable combinations of the above. More specific examples of the machine-readable storage medium may include an electric connector based on one or more wires, a portable computer disk, a hard disk drive, RAM, ROM, EPROM (or a flash memory), an optical fiber, CD-ROM, an optical storage device, a magnetic storage device, or any suitable combinations of the above. According to one or more embodiments of the disclosure, Example 1 provides a method for determining an effect video, which includes: in response to an effect triggering operation, adding a virtual effect model for a target object; and based on audio information collected, controlling a target virtual part of a virtual effect model corresponding to the target object to move, and adjusting a target entity part of the target object to a preset state to obtain a target effect video.

According to one or more embodiments of the present disclosure, Example 2 provides a method for determining an effect video, which further includes: optionally, the in response to an effect triggering operation includes at least one of the following: detecting that the target object is included in a capture screen; detecting that a control corresponding to a target effect prop is triggered; detecting that a body movement of the target object in the capture screen is consistent with a body movement for adding an effect; or detecting that voice information triggers a wake-up word for adding an effect.

According to one or more embodiments of the disclosure, Example 3 provides a method for determining an effect video, which further includes: optionally, the adding a virtual effect model for a target object, further including: determining a virtual effect model corresponding to the target object from a virtual effect library, the virtual effect library including at least one virtual effect model to be selected.

According to one or more embodiments of the present disclosure, Example 4 provides a method for determining an effect video, which further includes: optionally, the determining a virtual effect model corresponding to the target object from a virtual effect library includes: based on the basic attribute information of the target object, determining the virtual effect model corresponding to the target object.

According to one or more embodiments of the disclosure, Example 5 provides a method for determining an effect video, which further includes: optionally, before the adding a virtual effect model for a target object, further including: acquiring a to-be-processed image which is pre-uploaded, and determining the virtual effect model based on at least one display object in the to-be-processed image.

According to one or more embodiments of the present disclosure, Example 6 provides a method for determining an effect video, which further includes: optionally, the number of the target objects includes at least one, and the adding a virtual effect model for a target object: respectively adding a corresponding virtual effect model for each of the at least one target object; or adding a virtual effect model for a target object meeting a preset condition among the at least one target object; determining a target object corresponding to the audio information, adding the virtual effect model for the target object, and transparently displaying virtual effect models corresponding to other target objects among the at least one target object.

According to one or more embodiments of the present disclosure, Example 7 provides a method for determining an effect video, which further includes: optionally, the adding a virtual effect model for a target object including: determining an effect adding position corresponding to the target object and adding the virtual effect model to the effect adding position, the effect adding position including any position on a limb and a trunk of the target object or any position in a preset neighborhood centered on the target object.

According to one or more embodiments of the present disclosure, Example 8 provides a method for determining an effect video, which further includes: optionally, determining hand information of the target object, and determining that the effect adding position is a hand part in response to the hand information being consistent with preset hand posture information; and adding the virtual effect model at the hand part.

According to one or more embodiments of the present disclosure, Example 9 provides a method for determining an effect video, which further includes: optionally, the based on audio information collected, controlling a target virtual part of a virtual effect model corresponding to the target object to move including: in response to the audio information being collected, controlling the target virtual part of the virtual effect model corresponding to the target object to move; or, in response to the audio information being detected to include triggering motion content, controlling the target virtual part of the virtual effect model corresponding to the target object to move.

According to one or more embodiments of the disclosure, Example 10 provides a method for determining an effect video, which further includes: optionally, hiding the target virtual part from display, and migrating the target entity part to the target virtual part based on a pre-trained entity part migration model, motion information of the target virtual part corresponding to mouth shape information of the target entity part.

According to one or more embodiments of the present disclosure, Example 11 provides a method for determining an effect video, which further includes: optionally, the controlling a target virtual part of a virtual effect model corresponding to the target object to move including: acquiring mouth shape information of the target entity part and controlling the target virtual part to move based on the mouth shape information, motion information of the target virtual part being consistent with the mouth shape information.

According to one or more embodiments of the present disclosure, Example 12 provides a method for determining an effect video, which further includes: optionally, the virtual effect model being located at a hand part of the target object, and the controlling a target virtual part of a virtual effect model corresponding to the target object to move including: acquiring motion information of the hand part, and controlling the target virtual part to move based on the motion information.

According to one or more embodiments of the disclosure, Example 13 provides a method for determining an effect video, which further includes: optionally, in response to not obtaining the motion information of the hand part, controlling the target virtual part to move based on the audio information, motion information of the target virtual part corresponding to mouth information of the audio information.

According to one or more embodiments of the disclosure, Example 14 provides a method for determining an effect video, which further includes: optionally, the adjusting a target entity part of the target object to a preset state including: based on an entity part adjustment model corresponding to the preset state, adjusting the target entity part from a first state to the preset state.

According to one or more embodiments of the disclosure, Example 15 provides a method for determining an effect video, which further includes: optionally, the target entity part being a mouth part of the target object, the target virtual part being a mouth part of the virtual effect, and the preset state being a closed state or a smiling state of the mouth part.

According to one or more embodiments of the present disclosure, Example 16 provides an apparatus for determining an effect video, which further includes: an effect model adding module, configured to add a virtual effect model for a target object in response to an effect triggering operation; and a target effect video determining module, configured to, based on audio information collected, control a target virtual part of a virtual effect model corresponding to the target object to move, and adjust a target entity part of the target object to a preset state to obtain a target effect video.

The foregoing are merely descriptions of the embodiments of the present disclosure and the explanations of the technical principles involved. It will be appreciated by those skilled in the art that the scope of the disclosure involved herein is not limited to the technical solutions formed by a specific combination of the technical features described above, and shall cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, while operations have been described in a particular order, it shall not be construed as requiring that such operations are performed in the stated specific order or sequence. Under certain circumstances, multitasking and parallel processing may be advantageous. Similarly, while some specific implementation details are included in the above discussions, these shall not be construed as limitations to the present disclosure. Some features described in the context of a separate embodiment may also be combined in a single embodiment. Rather, various features described in the context of a single embodiment may also be implemented separately or in any appropriate sub-combination in a plurality of embodiments.

## Claims

1. A method for determining an effect video, comprising:
in response to an effect triggering operation, adding a virtual effect model for a target object; and
based on audio information collected, controlling a target virtual part of a virtual effect model corresponding to the target object to move, and adjusting a target entity part of the target object to a preset state to obtain a target effect video.

2. The method according to claim 1, wherein the in response to an effect triggering operation comprises at least one of:
detecting that the target object is included in a capture screen;
detecting that a control corresponding to a target effect prop is triggered;
detecting that a body movement of the target object in the capture screen is consistent with a body movement for adding an effect; or
detecting that voice information triggers a wake-up word for adding an effect.

3. The method according to claim 1, before the adding a virtual effect model for a target object, further comprising:
determining a virtual effect model corresponding to the target object from a virtual effect library,
wherein the virtual effect library comprises at least one virtual effect model to be selected.

4. The method according to claim 3, wherein the determining a virtual effect model corresponding to the target object from a virtual effect library comprises:
based on the basic attribute information of the target object, determining the virtual effect model corresponding to the target object.

5. The method according to claim 1, before the adding a virtual effect model for a target object, further comprising:
acquiring a to-be-processed image which is pre-uploaded, and determining the virtual effect model based on at least one display object in the to-be-processed image.

6. The method according to claim 1, wherein a number of the target objects comprises at least one, and the adding a virtual effect model for a target object comprises:
respectively adding a corresponding virtual effect model for each of the at least one target obj ect; or
adding a virtual effect model for a target object meeting a preset condition among the at least one target object; and
determining a target obj ect corresponding to the audio information, adding the virtual effect model for the target object, and transparently displaying virtual effect models corresponding to other target objects among the at least one target object.

7. The method according to claim 1, wherein the adding a virtual effect model for a target object comprises:
determining an effect adding position corresponding to the target object and adding the virtual effect model to the effect adding position,
wherein the effect adding position comprises any position on a limb and a trunk of the target object or any position in a preset neighborhood centered on the target object.

8. The method according to claim 7, wherein the determining an effect adding position corresponding to the target object and adding the virtual effect model to the effect adding position, comprises:
determining hand information of the target object, and determining that the effect adding position is a hand part in response to the hand information being consistent with preset hand posture information; and
adding the virtual effect model at the hand part.

9. The method according to claim 1, wherein the based on audio information collected, controlling a target virtual part of a virtual effect model corresponding to the target obj ect to move, comprises:
in response to the audio information being collected, controlling the target virtual part of the virtual effect model corresponding to the target object to move; or
in response to the audio information being detected to comprise triggering motion content, controlling the target virtual part of the virtual effect model corresponding to the target object to move.

10. The method according to claim 1 or 9, wherein the controlling a target virtual part of a virtual effect model corresponding to the target object to move comprises:
hiding the target virtual part from display, and migrating the target entity part to the target virtual part based on a pre-trained entity part migration model, wherein motion information of the target virtual part corresponds to mouth shape information of the target entity part.

11. The method according to claim 1 or 9, wherein the controlling a target virtual part of a virtual effect model corresponding to the target object to move comprises:
acquiring mouth shape information of the target entity part and controlling the target virtual part to move based on the mouth shape information,
wherein motion information of the target virtual part is consistent with the mouth shape information.

12. The method according to claim 1, wherein the virtual effect model is located at a hand part of the target object, and the controlling a target virtual part of a virtual effect model corresponding to the target object to move comprises:
acquiring motion information of the hand part, and controlling the target virtual part to move based on the motion information.

13. The method according to claim 12, further comprising:
in response to not obtaining the motion information of the hand part, controlling the target virtual part to move based on the audio information,
wherein motion information of the target virtual part corresponds to mouth information of the audio information.

14. The method according to claim 1, wherein the adjusting a target entity part of the target object to a preset state comprises:
based on an entity part adjustment model corresponding to the preset state, adjusting the target entity part from a first state to the preset state.

15. The method according to claim 1, wherein the target entity part is a mouth part of the target object, the target virtual part is a mouth part of the virtual effect, and the preset state is a closed state or a smiling state of the mouth part.

16. An apparatus for determining an effect video, comprising:
an effect model adding module, configured to add a virtual effect model for a target object in response to an effect triggering operation; and
a target effect video determining module, configured to, based on audio information collected, control a target virtual part of a virtual effect model corresponding to the target object to move, and adjust a target entity part of the target object to a preset state to obtain a target effect video.

17. An electronic device, comprising:
at least one processor; and
a storage apparatus configured to store at least one program,
wherein the at least one program upon being executed by the at least one processor, causes the at least one processor to implement the method for determining the effect video according to any one of claims 1 to 15.

18. A storage medium, comprising computer-executable instructions, wherein the computer-executable instructions, upon being executed by a computer processor, perform the method for determining the effect video according to any one of claims 1-15.
